# DEMANDE DE BREVET EUROPEEN

(11) **EP 2 899 444 A1**
(43) Date de publication de la demande: **29.07.2015**
(21) Numéro de dépôt: 15152747.0
(22) Date de dépôt: 27.01.2015
(51) Int. Cl.: F16L 37/14, F16L 41/08

(54) **Dispositif de raccordement hydraulique rapide**

(30) Priorité: 28.01.2014 FR 1450679
(71) Demandeur: BDR Thermea Group, 67580 Mertzwiller (FR)
(72) Inventeur: Klein, Sébastien, 67580 Laubach (FR); Kieffer, Damien, 67350 Uhrwiller (FR)
(74) Mandataire: Littolff, Denis

(57) **Abrégé**

Dispositif de raccordement hydraulique, du type raccord rapide, entre un embout mâle (1) et un embout femelle (2), les deux embouts (1, 2) étant d'allure cylindrique, l'embout mâle (1) étant dimensionné pour s'insérer à l'intérieur de l'embout femelle (2) selon un axe central (X) commun aux deux embouts (1, 2), ledit dispositif de raccordement comportant des moyens de blocage en translation d'un embout (1, 2) par rapport à l'autre et des moyens d'étanchéité.

Ce dispositif comporte également des moyens de blocage en rotation associés à un réglage du positionnement angulaire d'un embout (1, 2) par rapport à l'autre.

## Description

La présente invention se rapporte à un dispositif de raccordement hydraulique, du type raccord rapide, entre un embout mâle et un embout femelle, les deux embouts étant d'allure cylindrique, l'embout mâle étant dimensionné pour s'insérer à l'intérieur de l'embout femelle selon un axe central commun aux deux embouts.

Un raccord hydraulique est une liaison mécanique entre deux tuyaux, permettant le passage du fluide sans fuite. Les raccords rapides traditionnels instantanés (avec un clipsage d'un embout dans l'autre) ou à bagues (avec un écrou fou sur un embout et un filetage sur l'autre embout) permettent un raccord étanche, avec un blocage en translation entre les deux embouts. Cependant, certains d'entre eux, après connexion, autorisent un degré de liberté en rotation sans blocage possible, ce qui ne permet pas de figer le raccordement dans une position angulaire précise. D'autres n'autorisent pas la rotation après connexion, mais ne permettent pas non plus de choisir précisément la position angulaire d'un embout par rapport à l'autre.

L'objectif de la présente invention est de proposer une solution de raccordement hydraulique du type raccord rapide, avec un blocage en translation et en rotation, et avec une possibilité de réglage précis de la position angulaire d'un embout par rapport à l'autre. Ce raccordement se doit d'être simple de mise en oeuvre, réalisable par une seule personne, et sans outil.

Le dispositif selon l'invention comporte, de façon classique, des moyens de blocage en translation d'un embout par rapport à l'autre et des moyens d'étanchéité.

Ce dispositif se caractérise à titre principal en ce qu'il comporte également des moyens de blocage en rotation associés à un réglage du positionnement angulaire d'un embout par rapport à l'autre.

L'idée principale de cette invention consiste à combiner le blocage en rotation avec le réglage de la position angulaire d'un embout par rapport à l'autre, afin de pouvoir orienter les composants hydrauliques en amont des embouts, dans une optique d'intégration des composants hydrauliques dans un espace disponible, et de praticité en ce qui concerne l'accessibilité au raccord lors de sa mise en place et lors de sa maintenance.

Selon l'invention, lesdits moyens de blocage en translation consistent en une épingle calée entre deux lèvres saillant radialement à l'extérieur de l'embout mâle, le diamètre extérieur desdites lèvres étant inférieur au diamètre intérieur de l'embout femelle, ladite épingle étant en forme de U dont chacune des deux branches libres est apte à s'insérer selon une direction d'insertion perpendiculaire à l'axe central, successivement dans deux orifices pratiqués dans l'embout femelle et débouchant à l'intérieur et à l'extérieur de l'embout femelle, lesdits deux orifices étant colinéaires et alignés selon une corde du cercle défini par la section circulaire de l'embout femelle, les deux cordes associées aux deux branches étant symétriques par rapport au centre du cercle.

Cette épingle joue en quelque sorte le rôle de goupille permettant un blocage en translation dans une liaison mécanique classique entre deux tubes télescopiques prépercés selon des crans pour y insérer la goupille. Dans la présente invention, l'épingle a une forme spécifique, et vient bloquer le raccord au niveau de deux zones périphériques opposées au sein du raccord, et ce tout en permettant de conserver les propriétés d'étanchéité du raccord.

Selon une première configuration possible, lesdits moyens de blocage en rotation consistent en un tronçon de l'embout mâle dont le pourtour extérieur comprend au moins deux méplats situés en vis-à-vis par rapport à l'axe central, les deux branches libres de l'épingle étant calées au contact des méplats extérieurs de l'embout mâle.

Les deux méplats permettent ainsi de caler les deux branches libres de l'épingle, et d'empêcher toute rotation d'un embout par rapport à l'autre, puisque chaque méplat est en contact avec une branche libre de l'épingle le long d'une portion linéaire et non pas uniquement en un point. En effet, en l'absence de méplat, le pourtour extérieur circulaire de l'embout mâle serait en contact avec chaque branche libre de l'épingle uniquement en un point, et pourrait donc tourner par rapport à l'épingle, et à fortiori par rapport à l'embout femelle, par simple frottement au niveau du point de contact.

Lors du montage de l'embout mâle, l'opérateur peut orienter les méplats selon le positionnement angulaire désiré entre les deux embouts. Il lui suffit ensuite de venir placer l'embout femelle autour de l'embout mâle, en faisant correspondre les méplats sélectionnés avec une paire d'orifices alignés, puis d'introduire l'épingle dans les orifices.

Afin de mutualiser les moyens de blocage en translation et en rotation, ledit tronçon aux méplats de l'embout mâle est délimité axialement par lesdites deux lèvres des moyens de blocage en translation. Cela permet de simplifier l'embout mâle, puisque seules deux lèvres sont nécessaires pour la réalisation à la fois du blocage en translation et du blocage en rotation.

Pour affiner le réglage du positionnement angulaire entre les deux embouts, ledit tronçon comporte n méplats égaux placés selon une disposition régulière au niveau de son pourtour, n étant un nombre pair, chaque méplat correspondant à une position angulaire discrète de l'embout mâle par rapport à l'embout femelle.

Ainsi, même si l'embout mâle n'est pas correctement orienté au début du montage, il est tout de même possible de choisir n positions angulaires lors du raccordement de l'embout femelle. Un indexage de la position angulaire est ainsi possible entre les deux embouts pendant le montage, et ce de manière très simplifiée. Si l'opérateur décide finalement de changer l'orientation du raccord pour une raison quelconque, il lui suffit de retirer l'épingle, de séparer l'embout femelle de l'embout mâle, de réintroduire l'embout femelle sur l'embout mâle selon un autre angle parmi les n possibilités, et de verrouiller le raccord avec l'épingle. Cette opération est donc très simple de mise en oeuvre, et ne nécessite aucun outillage.

De préférence, ledit tronçon comporte huit méplats symétriques deux à deux par rapport à l'axe central pour huit positions angulaires discrètes de l'embout mâle par rapport à l'embout femelle.

Selon une deuxième configuration possible, lesdits moyens de blocage en rotation consistent en :
- au moins un goujon fixé sur une paroi d'où saille l'embout mâle et s'étendant au voisinage de l'embout mâle selon un axe parallèle à l'axe central ;
- une oreille s'étendant radialement de l'extrémité libre de l'embout femelle et dotée d'au moins un trou oblong dans lequel s'insère ledit goujon ;
- des moyens de serrage de l'oreille en appui contre la paroi, lesdits moyens coopérant avec le goujon.

La forme oblongue du trou permet d'insérer plus facilement le goujon lors du montage du raccord.

Dans l'hypothèse où n'existe qu'un seul goujon et où l'oreille de l'embout femelle n'est dotée que d'un seul trou, il n'y aura qu'une seule position angulaire possible entre les deux embouts. Cette position est alors prédéterminée selon des considérations techniques.

Dans le cas où n'existe qu'un seul goujon et où l'oreille est dotée de plusieurs trous, chaque trou constitue un positionnement angulaire possible entre les deux embouts. Le réglage du positionnement angulaire s'effectue en orientant un embout par rapport à l'autre jusqu'à faire coïncider un trou avec le goujon selon une orientation souhaitée des composants hydrauliques en amont. De la même manière, lorsqu'il existe plusieurs goujons et lorsque l'oreille n'est dotée que d'un seul trou, chaque goujon constitue un positionnement angulaire possible entre les deux embouts. Enfin, lorsqu'il existe plusieurs goujons et plusieurs trous dans l'oreille, une pluralité de positionnements angulaires est possible entre les deux embouts.

Cette configuration avec une fixation déportée entre un goujon et une oreille d'un raccord remplit additionnellement une autre fonction que celle du réglage du positionnement angulaire. Elle permet de reporter sur la liaison mécanique goujon/oreille une partie des contraintes exercées sur le raccord au niveau des extrémités libres des deux embouts. En effet, certains composants hydrauliques sont relativement lourds, et peuvent induire un couple sur le raccord lors de leur fonctionnement. L'accrochage de l'oreille sur le goujon permet de répartir les efforts et de soutenir une partir du poids des composants hydrauliques pour éviter une usure prématurée des embouts, voire une rupture du raccord.

De préférence, lesdits moyens de serrage consistent en un écrou coopérant avec un goujon fileté.

Selon une possibilité, le dispositif comporte des moyens de positionnement axial de l'embout femelle par rapport à l'embout mâle en vue du blocage en translation et en rotation. De préférence, ces moyens consistent en une collerette s'étendant radialement sur le pourtour extérieur de l'embout mâle à distance de son extrémité libre, l'extrémité libre de l'embout femelle venant se positionner en butée contre cette collerette avant le blocage en translation et en rotation. Une fois les embouts en butée l'un contre l'autre, dans l'orientation choisie par l'opérateur, les orifices de l'embout femelle se retrouvent au même niveau que le tronçon de l'embout mâle délimité par les deux lèvres des moyens de blocage en translation, et l'insertion de l'épingle est alors possible.

De façon avantageuse, ladite collerette correspond à la lèvre des moyens de blocage en translation distale de l'extrémité libre de l'embout mâle. Ainsi, pour le positionnement des embouts et leur blocage en translation et en rotation, seules deux lèvres au total sont nécessaires.

Par ailleurs, lesdits moyens d'étanchéité consistent en un joint torique positionné sur le pourtour extérieur d'un tronçon d'étanchéité de l'embout mâle au voisinage de son extrémité libre et maintenu axialement en position entre deux lèvres saillant radialement à l'extérieur de l'embout mâle et bordant ledit tronçon d'étanchéité. Et de façon avantageuse, les moyens de blocage en translation et les moyens d'étanchéité possèdent une lèvre commune sur l'embout mâle. Ainsi, pour le positionnement des embouts et leur blocage en translation et en rotation, et pour l'étanchéité du raccord, seules trois lèvres au total sont nécessaires.

Un tel raccord hydraulique peut être utilisé par exemple dans un système de chauffage du type pompe à chaleur, où les différents composants hydrauliques sont agencés dans une armoire se voulant de plus en plus compacte. Par exemple, ce système de chauffage peut comprendre un bloc hydraulique multifonction connecté à au moins un collecteur au moyen d'un dispositif de raccordement tel que décrit ci-dessus. Il peut aussi comprendre un échangeur à plaques également connecté audit collecteur au moyen d'un autre dispositif de raccordement tel que décrit auparavant.

L'invention va à présent être décrite plus en détail, en référence aux figures annexées, pour lesquelles :
- la figure 1 est une vue éclatée du dispositif de raccordement hydraulique selon une première configuration possible ;
- les figures 2 et 3 représentent une vue de coupe respectivement radiale et transversale du dispositif de raccordement selon la figure 1 ;
- la figure 4 montre une vue éclatée du dispositif de raccordement hydraulique selon une deuxième configuration possible ;
- les figures 5 et 6 illustrent deux exemples de mise en oeuvre de l'invention au sein d'un système de chauffage.

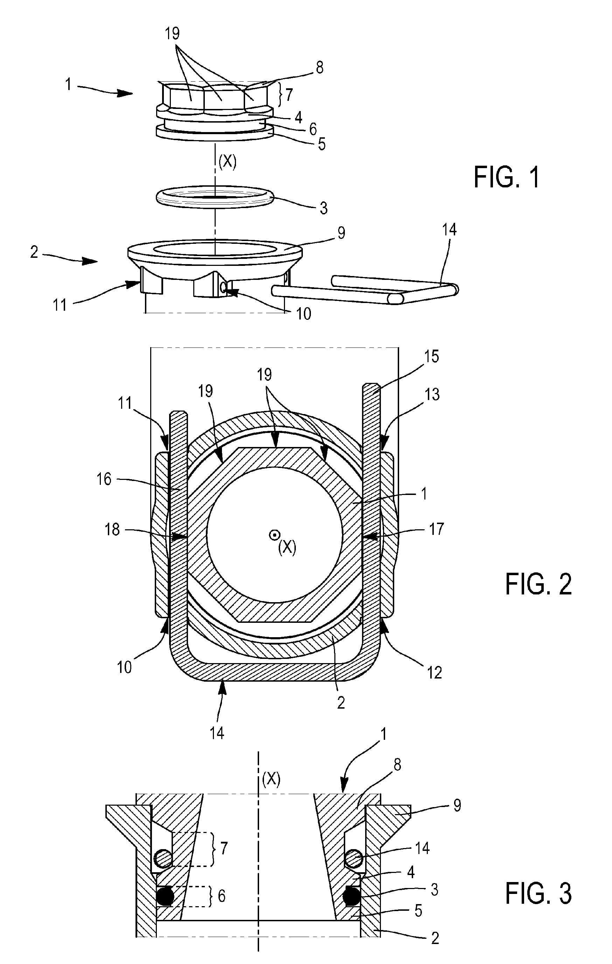

En référence aux figures 1 à 3, montrant une première configuration possible de l'invention, un embout mâle (1) vient s'insérer à l'intérieur d'un embout femelle (2), les deux embouts (1, 2) étant d'allure tubulaire et étant raccordés selon un axe central (X).

L'embout mâle (1) comprend successivement depuis son extrémité libre :
- une première lèvre (5) extérieure ;
- un tronçon (6) circulaire d'étanchéité apte à accueillir un joint torique (3) d'étanchéité ;
- une seconde lèvre (4) extérieure ;
- un tronçon (7) d'allure octogonale comprenant huit méplats (19) répartis de façon homogène sur le tronçon (7) ;
- une troisième lèvre ou collerette (8) extérieure s'étendant radialement.

L'embout femelle (2) comprend, en amont de son extrémité libre (9) élargie vers l'extérieur, deux paires de protubérances dotées chacune d'un orifice (10, 11, 12, 13) débouchant à l'extérieur et à l'intérieur de l'embout, et positionnées symétriquement par rapport à l'axe central (X). Les deux orifices (10, 11 ; 12, 13) appartenant à une paire de protubérances sont colinéaires, définissent une corde dans la section circulaire de l'embout (2), et sont aptes à accueillir une branche libre (16, 15) d'une épingle (14) en forme de U.

Comme cela est bien visible en figure 2, l'épingle (14) ne peut être insérée que lorsque l'embout mâle (1) est positionné dans l'embout femelle (2) avec deux méplats (19) symétriquement opposés situés de manière à libérer le passage pour les branches (15, 16), c'est-à-dire en substance parallèles aux cordes formées par les paires d'orifices (10, 11 ; 12, 13). Dans ce cas, l'épingle (14) peut être introduite et une portion intérieure (17, 18) de chacune de ses branches libres (15, 16) est en contact avec les deux méplats (19). Ce contact s'établit linéairement et non pas uniquement en un point, ce qui permet aux embouts (1, 2) d'être bloqués en rotation. Le nombre de méplats (19) offre autant de possibilités de réglages de l'orientation angulaire d'un embout (1, 2) par rapport à l'autre.

Le blocage en translation est illustré en figure 3. En effet, l'épingle (14) est retenue axialement en position au niveau du tronçon (7) au moyen de la seconde lèvre (4) et de la collerette (8), correspondant à des butées axiales inférieure et supérieure.

De la même manière, le joint torique d'étanchéité est maintenu en position au niveau du tronçon (6) au moyen de la première lèvre (5) et de la seconde lèvre (4), correspondant à des butées axiales inférieure et supérieure.

Par ailleurs, avant l'étape de blocage en rotation et en translation, les embouts mâle (1) et femelle (1) sont prépositionnés l'un par rapport à l'autre, comme cela est visible en figure 3. A cet effet, la collerette (8) de l'embout mâle (1) comprend une encoche dans laquelle vient se caler l'extrémité libre (9) de l'embout femelle (2). Ce calage permet à l'utilisateur de savoir que les deux embouts (1, 2) sont correctement positionnés axialement et que l'épingle (14) peut être introduite.

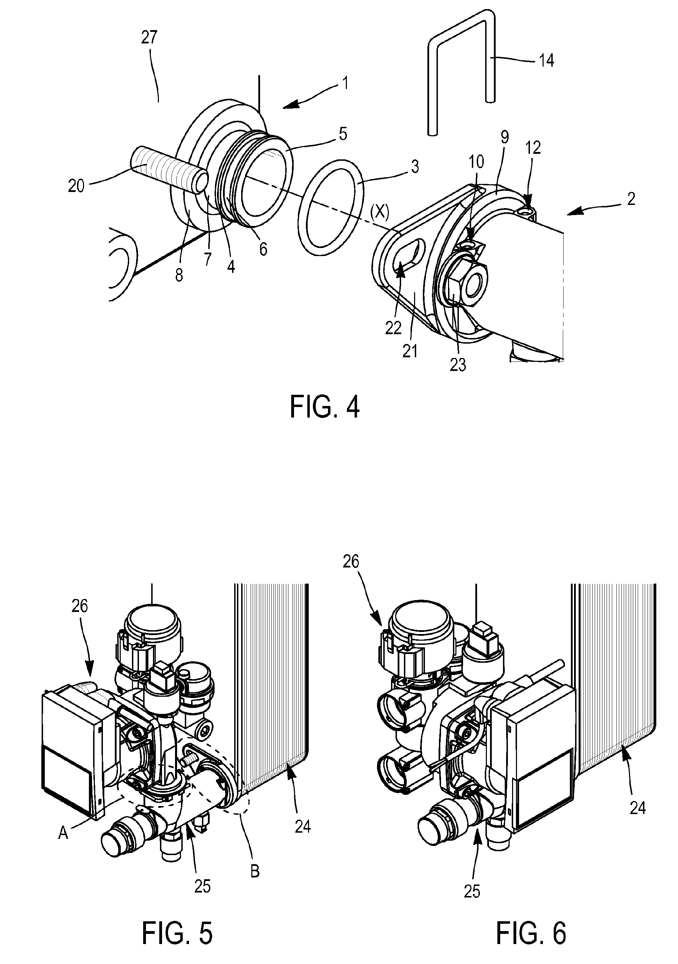

La figure 4 montre une seconde configuration possible de l'invention. Pour plus de clarté, les références numériques de la première configuration ont été conservées afin d'établir une correspondance entre les deux configurations.

L'embout mâle (1) diffère de celui de la première configuration en ce que le tronçon (7) est circulaire et non plus octogonal, et en ce qu'il est associé à un goujon (20) fileté orienté parallèlement à l'axe (X) et s'étendant perpendiculairement à une paroi (27) d'où saille l'embout mâle (1).

L'embout femelle (2) diffère de celui de la première configuration en ce qu'il comprend une oreille (21) s'étendant radialement de son extrémité libre (9), et dotée d'un trou oblong (22) apte à accueillir le goujon fileté (20). Un écrou (23) est utilisé pour le serrage.

Dans ce cas, le blocage en translation est identique à la première configuration, tandis que le blocage en rotation s'effectue par le positionnement angulaire entre l'oreille (21) et le goujon (20). Cette fixation déportée entre l'oreille (21) et le goujon (20) permet également de reporter une partie des contraintes exercée sur les embouts (1, 2) connectés, et de rigidifier le dispositif de raccordement.

Un exemple d'utilisation de ce type de raccord est utilisé en figure 5, dans le cadre d'une pompe à chaleur. Concrètement, un bloc hydraulique multifonction (26) (comprenant des composants hydrauliques du type pompe, vanne, entrées du circuit de chauffage et du circuit d'eau chaude sanitaire, sortie d'eau, manomètre, etc) est connecté à un collecteur (25) (comprenant par exemple une sonde de température, un purgeur, un dispositif de vidange, etc) via un raccord hydraulique (A) selon la première configuration présentée ci-dessus, l'embout mâle appartenant au bloc (26) et l'embout femelle au collecteur (25). Ce dernier est lui-même connecté à un échangeur à plaques (24) au moyen d'un raccord hydraulique (B) selon la seconde configuration présentée ci-dessus, l'embout mâle appartenant à l'échangeur à plaques (24) et l'embout femelle au collecteur (25).

En figure 6, le bloc (26) hydraulique multifonction a pivoté d'un angle de 90° par rapport au collecteur (25), grâce aux possibilités d'orientation qu'offre le raccord (A) au moyen des méplats.

Les configurations montrées aux figures citées ne sont que des exemples possibles, nullement limitatifs, de l'invention qui englobe au contraire les variantes de formes et de conceptions à la portée de l'homme de l'art.

## Revendications

1. Dispositif de raccordement hydraulique, du type raccord rapide, entre un embout mâle (1) et un embout femelle (2), les deux embouts (1, 2) étant d'allure cylindrique, l'embout mâle (1) étant dimensionné pour s'insérer à l'intérieur de l'embout femelle (2) selon un axe central (X) commun aux deux embouts (1, 2), ledit dispositif de raccordement comportant des moyens de blocage en translation d'un embout (1, 2) par rapport à l'autre et des moyens d'étanchéité,
**caractérisé en ce qu'**il comporte également des moyens de blocage en rotation associés à un réglage du positionnement angulaire d'un embout (1, 2) par rapport à l'autre.

2. Dispositif de raccordement hydraulique selon la revendication précédente, **caractérisé en ce que** lesdits moyens de blocage en translation consistent en une épingle (14) calée entre deux lèvres (4, 8) saillant radialement à l'extérieur de l'embout mâle (1), le diamètre extérieur desdites lèvres (4, 8) étant inférieur au diamètre intérieur de l'embout femelle (2), ladite épingle (14) étant en forme de U dont chacune des deux branches libres (15, 16) est apte à s'insérer, selon une direction d'insertion perpendiculaire à l'axe central (X), successivement dans deux orifices (10, 11 ; 12, 13) pratiqués dans l'embout femelle (2) et débouchant à l'intérieur et à l'extérieur de l'embout femelle (2), lesdits deux orifices (10, 11 ; 12, 13) étant colinéaires et alignés selon une corde du cercle défini par la section circulaire de l'embout femelle (2), les deux cordes associées aux deux branches (15, 16) étant symétriques par rapport au centre du cercle.

3. Dispositif de raccordement hydraulique selon la revendication précédente, **caractérisé en ce que** lesdits moyens de blocage en rotation consistent en un tronçon (7) de l'embout mâle (1) dont le pourtour extérieur comprend au moins deux méplats (19) situés en vis-à-vis par rapport à l'axe central (X), les deux branches libres (15, 16) de l'épingle (14) étant calées au contact des méplats (19) extérieurs de l'embout mâle (1).

4. Dispositif de raccordement hydraulique selon la revendication précédente, **caractérisé en ce que** ledit tronçon (7) aux méplats (19) de l'embout mâle (1) est délimité axialement par lesdites deux lèvres (4, 8) des moyens de blocage en translation.

5. Dispositif de raccordement hydraulique selon la revendication précédente, **caractérisé en ce que** ledit tronçon (7) comporte n méplats (19) égaux placés selon une disposition régulière au niveau de son pourtour, n étant un nombre pair, chaque méplat (19) correspondant à une position angulaire discrète de l'embout mâle (1) par rapport à l'embout femelle (2).

6. Dispositif de raccordement hydraulique selon la revendication précédente, **caractérisé en ce que** ledit tronçon (7) comporte huit méplats (19) symétriques deux à deux par rapport à l'axe central (X) pour huit positions angulaires discrètes de l'embout mâle (1) par rapport à l'embout femelle (2).

7. Dispositif de raccordement hydraulique selon la revendication 1, **caractérisé en ce que** lesdits moyens de blocage en rotation consistent en :
- au moins un goujon (20) fixé sur une paroi (27) d'où saille l'embout mâle (1) et s'étendant au voisinage de l'embout mâle (1) selon un axe parallèle à l'axe central (X) ;
- une oreille (21) s'étendant radialement de l'extrémité libre (9) de l'embout femelle (2) et dotée d'au moins un trou oblong (22) dans lequel s'insère ledit goujon (20);
- des moyens (23) de serrage de l'oreille (21) en appui contre la paroi (27), lesdits moyens (23) coopérant avec le goujon (20).

8. Dispositif de raccordement hydraulique selon la revendication précédente, **caractérisé en ce que** lesdits moyens (23) de serrage consistent en un écrou (23) coopérant avec un goujon fileté (20).

9. Dispositif de raccordement hydraulique selon l'une des revendications précédentes, **caractérisé en ce qu'**il comporte des moyens de positionnement axial de l'embout femelle (2) par rapport à l'embout mâle (1) en vue du blocage en translation et en rotation.

10. Dispositif de raccordement hydraulique selon la revendication précédente, **caractérisé en ce que** lesdits moyens de positionnement axial consistent en une collerette (8) s'étendant radialement sur le pourtour extérieur de l'embout mâle (1) à distance de son extrémité libre, l'extrémité libre (9) de l'embout femelle (2) venant se positionner en butée contre cette collerette (8) avant le blocage en translation et en rotation.

11. Dispositif de raccordement hydraulique selon la revendication précédente, **caractérisé en ce que** ladite collerette (8) correspond à la lèvre (8) des moyens de blocage en translation distale de l'extrémité libre de l'embout mâle (1).

12. Dispositif de raccordement hydraulique selon l'une des revendications précédentes, **caractérisé en ce que** lesdits moyens d'étanchéité consistent en un joint (3) torique positionné sur le pourtour extérieur d'un tronçon d'étanchéité (6) de l'embout mâle (1) au voisinage de son extrémité libre et maintenu axialement en position entre deux lèvres (4, 5) saillant radialement à l'extérieur de l'embout mâle (1) et bordant ledit tronçon d'étanchéité (6).

13. Dispositif de raccordement hydraulique selon la revendication précédente, **caractérisé en ce que** les moyens de blocage en translation et les moyens d'étanchéité possèdent une lèvre (4) commune sur l'embout mâle (1).

14. Système de chauffage du type pompe à chaleur comprenant un bloc hydraulique multifonction (26) connecté à au moins un collecteur (25) au moyen d'un dispositif de raccordement (A) tel que décrit dans les revendications 2 à 6 et 9 à 13, et comprenant un échangeur à plaques (24) connecté audit collecteur (25) au moyen d'un dispositif de raccordement (B) tel que décrit dans les revendications 7 à 13.
